# FASCICULE DE BREVET EUROPEEN

(11) **EP 0 394 080 B1**
(45) Date de publication et mention de la délivrance du brevet: **20.10.1993**
(21) Numéro de dépôt: 90400798.6
(22) Date de dépôt: 23.03.1990
(51) Int. Cl.: F16C 33/41

(54) **Cage autoajustable pour roulement a billes**
Selbsteinstellender Käfig für Kugellager
Self-adjusting cage for ball bearing

(30) Priorité: 18.04.1989 FR 8905097
(43) Date de publication de la demande: 24.10.1990
(73) Titulaire: S.N.R. ROULEMENTS, 74010 Annecy Cédex (FR)
(72) Inventeur: Valette, Michel, F-74600 Seymond (FR)
(74) Mandataire: Ernst-Schonberg, Michel

(56) Documents cités:
- DE-U- 1 806 341
- FR-A- 2 320 455
- FR-A- 2 507 715
- GB-A- 1 370 890
- US-A- 4 169 636

## Description

L'invention concerne une cage autoajustable pour roulement à billes, conforme au préambule de la revendication.

L'invention concerne plus particulièrement une telle cage en matière plastique localement déformable.

La publication GB-A-1370890 décrit une telle cage autoajustable constituée par un anneau circulaire porteur de cavités de réception des billes circonférentiellement réparties qui débouchent axialement sur une face de l'anneau. Des saillies flexibles sont situées en prolongement des parois desdites cavités de l'anneau pour délimiter l'ouverture d'introduction des billes tandis que des barrières de guidage respectivement disposées entre deux saillies de deux cavités consécutives de la cage, assurent le guidage des billes vers les ouvertures d'introduction.

La publication FR-A-2507715 décrit une cage dans laquelle une barrière est située entre les logements contigus et s'étend en direction axiale à partir de la face de l'anneau dans le même sens que les languettes flexibles voisines. Cette disposition facilite l'ajustement de la cage par rapport aux billes et évite notamment l'écrasement des languettes.

Au cours du fonctionnement du roulement, les contraintes exercées par les billes sur la cage sont susceptibles de provoquer dans certains cas l'éjection de celle-ci par suite de la souplesse exagérée des languettes ou de leur rupture, notamment lorsque la matière de la cage contient une charge (exemple : fibre de verre) destinée à améliorer ses caractéritsiques physiques et mécaniques (résistance à l'échauffement, stabilité dimensionnelle)

L'invention a pour objet une cage du type prédéfini dans laquelle les risques d'éjection et de rupture des languettes sont supprimés.

Ce problème est résolu conformément à la caractéristique de la revendication.

La cage ainsi constituée peut être déformée au niveau de sa base dans le sens de l'agrandissement des logements pour obtenir un écartement suffisant des languettes de rétention pour l'introduction des billes dans lesdits logements.

Un autre avantage de la cage réside dans le fait que la déformation de la base de l'anneau, consécutivement aux déformations des patins est répartie sur l'ensemble de l'anneau.

La fabrication de la cage permet aussi un gain substantiel de la matière et est rendue plus facile en raison de l'épaisseur sensiblement constante de la cage dans ses diverses sections.

Par ailleurs, le fonctionnement du roulement équipé de ce type de cage est amélioré par suite de l'inertie plus réduite de la cage.

D'autres caractéristiques et avantages de la cage apparaîtront à la lecture de la description qui suit fait en référence au dessin annexé dans lequel

La figure 1 est une vue en perspective de la cage.

La figure 2 est une vue en coupe partielle de la cage.

La figure 3 est coupe radiale de la cage suivante la ligne 3-3 de la figure 2.

La figure 4 est une vue en coupe axiale du roulement équipé de la cage conforme à l'invention.

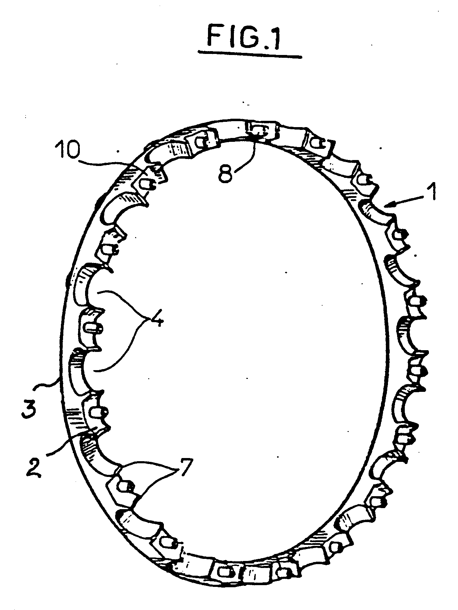

La figure 1 représente une cage en matière plastique constituée par un anneau 1 portant deux faces axiales 2, 3. Sur la face 2 débouchant des logements 4 en forme de calotte spérique de réception des billes 5,uniformément réparties circonférentiellement. Sur la face 3 débouchent des cavités 6 angulairement décalées par rapport aux logements 4.

Deux languettes rigides 7 situées aux bords opposés de chaque logement 4 s'étendent axialement au-dessus du plan de la face 2. Par ailleurs, entre les languettes 7 de deux logements consécutifs, est compris un doigt 8 facilitant un positionnement automatique de la bille ou de la cage lors de l'insertion des billes dans leurs logements respectifs et de leur rétention axiale par les languettes 7. Selon l'invention, les languettes 7 des logements contigus sont raccordés par une cloison 10 indéformable limitée axialement en direction de la face 3 par le fond de la cavité 6.

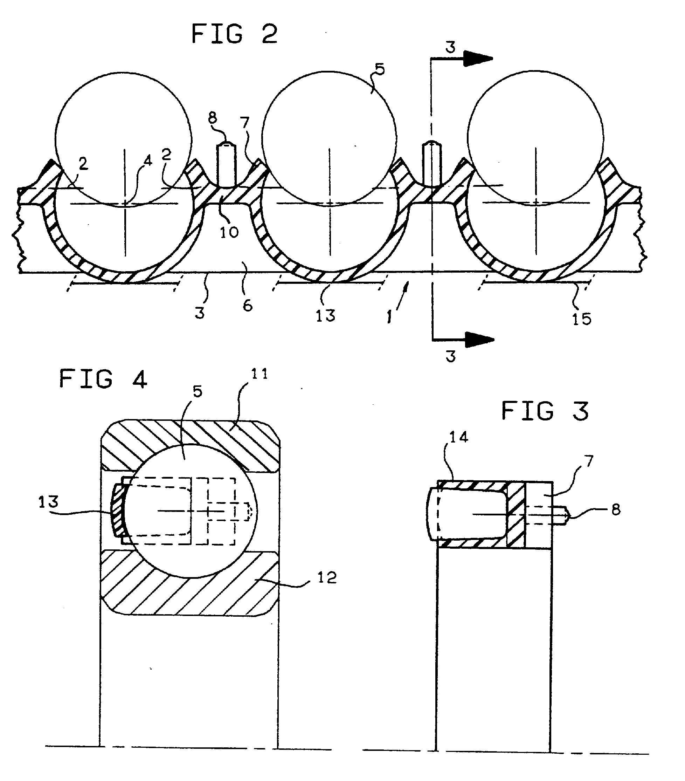

Dans le but de permettre le montage de la cage sur les billes réparties circonférentiellement entre les bagues extérieure 11 et intérieure 12 d'un roulement tel que représenté à la figure 4, chaque cavité 6 débouche entre deux discontinuités de la face 3 formées par des patins 13 élastiquement déformables dont l'épaisseur axiale est limitée par le fond du logement 4 correspondant de la bille. Sous réserve que l'épaisseur des patins 13 et de la paroi du logement soient suffisamment faibles par rapport au diamètre de la bille (8% de son diamètre) et supérieure à 0,5 millimètre, il devient possible d'obtenir un écartement suffisant des languettes 7 pour permettre l'introduction de l'ensemble des billes 5 dans leurs logements par flexion des patins 13 communiquée par un outil spécifique 15 à poussée axiale sous réserve que les parois latérales 14 des cavités 6 et des logements 4 soient suffisamment minces. Dans ce cas, la poussée de l'outil posé sur les patins 13 assure la flexion de l'ensemble de ceux-ci et l'ouverture des logements 4 par suite de la minceur de la paroi de celui-ci.

## Revendications

1. Cage auto-ajustable pour roulements à billes constituée par un anneau (1), des cavités (6) délimitées par une cloison (10) et par deux parois latérales (14) réparties circonférentiellement et débouchant sur une première face (3) extrême de l'anneau, des logements (4) en forme de calotte sphérique ouverts sur la face (2) extrême opposée de l'anneau, deux languettes (7) de rétention des billes adjacentes à chaque logement (4) et situées aux bords opposés de chaque logement (4) et se prolongeant axialement à partir de ladite face extrême opposée (2) de l'anneau, et dans laquelle les languettes (7) de deux logements (4) contigus sont raccordées par une cloison (10) indéformable qui est limitée axialement en direction de la première face (3) de l'anneau par le fond de la cavité (6), caractérisé par le fait que les languettes sont rigides et que chaque cavité (6) débouche entre deux patins (13) élastiquement déformables formés par la paroi des logements (4) dont l'épaisseur axiale est sensiblement égale à 0,08 fois le diamètre de la bille et supérieure à 0,5 millimètre et qui est limitée axialement par le fond du logement (4) correspondant de la bille.

## Claims

1. A self-adjusting cage for ball bearings formed by a ring (1), cavities (6) bounded by a partition (10) and by two lateral walls (14) distributed peripherally and opening out on a first end surface (3) of the ring, housings (4) in the form of spherical caps open on the opposite end surface (2) of the ring, two tongues (7) for retaining the balls adjacent to each housing (4) and disposed on the opposite edges of each housing (4) and extending axially from the opposite end surface (2) of the ring, and in which the tongues (7) of two adjacent housings (4) are connected by a non-deformable partition (10) which is axially bounded in the direction of the first surface (3) of the ring by the base of the cavity (6), characterized in that the tongues are rigid and in that each cavity (6) opens out between two elastically deformable blocks (13) formed by the wall of the housings (4) whose axial thickness is substantially equal to 0.08 times the diameter of the ball and greater than 0.5 mm and which is bounded axially by the base of the corresponding housing (4) of the ball.

## Patentansprüche

1. Selbsteinstellender Käfig für Kugellager, bestehend aus einem Ring (1), Aussparungen (6), die durch eine Trennwand (10) und durch zwei Seitenwände (14) begrenzt sind, entlang des Umfangs verteilt sind und in einer ersten Außenfläche (3) des Rings münden, Senkungen (4) in Form kugelförmiger Kalotten, die zur gegenüberliegenden Außenfläche (2) des Ringes offen sind, zwei Haltefedern (7) für benachbarte Kugeln in jeder Ausnehmung (4), die an den sich gegenüberliegenden Rändern einer jeden Ausnehmung (4) angeordnet sind und sich axial von der gegenüberliegenden Außenfläche (2) des Ringes aus erstrecken, wobei die Federn (7) zweier benachbarter Ausnehmungen (4) durch eine starre Trennwand (10) verbunden sind, die axial in Richtung zur ersten Fläche (3) des Ringes hin durch den Boden der Aussparung (6) begrenzt ist, dadurch gekennzeichnet, daß die Federn steif sind und daß jede Aussparung (6) zwischen zwei elastisch verformbaren Kufen (13) mündet, die durch die Wand der Ausnehmungen (4) gebildet sind und deren axiale Dicke im wesentlichen gleich 0,08 Mal den Kugeldurchmesser ist und größer als 0,5 mm ist und die axial durch den Boden der Ausnehmung der zugehörigen Kugel begrenzt ist.
